# EUROPÄISCHE PATENTSCHRIFT

(11) **EP 1 810 250 B1**
(45) Veröffentlichungstag und Bekanntmachung des Hinweises auf die Patenterteilung: **22.06.2016**
(21) Anmeldenummer: 05801651.0
(22) Anmeldetag: 08.11.2005
(51) Int. Cl.: G06Q 10/06

(54) **VERFAHREN ZUR VERKNÜPFUNG VON TECHNISCHEN DATEN UND SYSTEM ZUM BEDIENEN UND BEOBACHTEN EINER INDUSTRIELLEN ANLAGE**
METHOD FOR INTERLINKING TECHNICAL DATA AND SYSTEM FOR OPERATING AND OBSERVING AN INDUSTRIAL PLANT
PROCEDE POUR COMBINER DES DONNEES TECHNIQUES ET SYSTEME POUR FAIRE FONCTIONNER OU SURVEILLER UNE INSTALLATION INDUSTRIELLE

(30) Priorität: 09.11.2004 DE 102004054355
(43) Veröffentlichungstag der Anmeldung: 25.07.2007
(73) Patentinhaber: Primetals Technologies Germany GmbH, 91052 Erlangen (DE)
(72) Erfinder: HEIMKE, Thomas, 91056 Erlangen (DE); WELLENBRINK, Udo, 91056 Erlangen (DE)
(74) Vertreter: Metals@Linz
(86) Internationale Anmeldenummer: PCT/EP2005/055832
(87) Internationale Veröffentlichungsnummer: WO 2006/051076

(56) Entgegenhaltungen:
- WO-A-93/24872
- DE-A1- 19 927 498
- US-A- 5 247 693
- US-A1- 2004 003 121
- US-A1- 2004 030 536
- PATENT ABSTRACTS OF JAPAN Bd. 2003, Nr. 12, 5. Dezember 2003 (2003-12-05) & JP 2004 265140 A (RICOH CO LTD), 24. September 2004 (2004-09-24)

## Beschreibung

Die Erfindung betrifft ein Verfahren zur Verknüpfung von technischen Daten und ein System zum Bedienen und Beobachten einer industriellen Anlage.

Im Rahmen der Automatisierung einer industriellen Anlage entsteht eine Vielzahl von technischen Ergebnissen, so genannten Engineering-Ergebnissen. Diese Ergebnisse wesen - falls sie in Form von elektronischen Daten vorliegen - selbst wenn sie sich auf eine einzige industrielle Anlage beziehen, mehrere voneinander völlig unterschiedliche Datenformate auf. Dadurch werden Betrieb, Wartung und Erweiterung der industriellen Anlage erheblich erschwert.

Aus der WO 00/26839 A, US2004/0088157 A und der US 6,154,213 A sind jeweils verschiedene Informations- und Dokumentenverwaltungssysteme bekannt, welche Informationen aus einzelnen verschiedenen Dokumenten extrahieren und in ein neues Format umwandeln und speichern.

Die WO 93/24872 A beschreibt ein Verfahren zur Verarbeitung von Messgrößen in einer Energieerzeugungsanlage.

Aufgabe der Erfindung ist es, den Betrieb, die Wartung und ggf. die Erweiterung.einer industriellen Anlage zu vereinfachen.

Diese Aufgabe wird durch den Gegenstand der Ansprüche 1 und 3 gelöst.

Mit Vorteil kann diese Verknüpfung der in dem mindestens einen standardisierten Format vorliegenden Daten in Form von Navigationspfaden nachgebildet werden.

Mit Vorteil können die verknüpften und in dem mindestens einen standardisierten Format vorliegenden Daten als generierte Anlagen-Dokumentation auf einem Dokumentationsserver abgelegt werden.

Die der Erfindung zugrunde liegende Aufgabe wird auch gelöst durch ein System zum Bedienen und Beobachten einer industriellen Anlage mit mindestens einer Ein- und Ausgabevorrichtung, mit mindestens einer Automatisierungsvorrichtung und mit einem Dokumentationsserver, auf dem die generierte Anlagen-Dokumentation abgelegt ist, wobei die mindestens eine Ein- und Ausgabevorrichtung mit der mindestens einen Automatisierungsvorrichtung gekoppelt ist.

Mit Vorteil kann die Ein- und Ausgabevorrichtung Mittel zur Ansteuerung der Automatisierungsvorrichtung aufweisen, die Kontext sensitiv mit den entsprechenden Teilen der auf dem Dokumentationsserver abgelegten generierten Anlagen-Dokumentation verknüpfbar sind.

Durch die Erfindung und ihre Ausgestaltungen wird ein erheblich schnelleres und weniger fehlerträchtiges Nachverfolgen von Fehlerbildern in der industriellen Anlage, ihren Teilen bzw. in ihrem Automatisierungssystem ermöglicht. Des Weiteren wird eine zielorientierte Erweiterung einer Anlagenautomatisierung möglich, da die Bestandteile der industriellen Anlage und des Automatisierungssystems der industriellen Anlage mit inneren und gegenseitigen Wechselwirkungen umfassend eingesehen werden können.

Weitere Vorteile und Einzelheiten der Erfindung werden nachfolgend beispielhaft anhand der Zeichnungen beschrieben. Es zeigen:
- FIG 1: eine industrielle Anlage mit einem Automatisierungssystem;
- FIG 2: eine Benutzeroberfläche einer Ein- und Ausgabevorrichtung

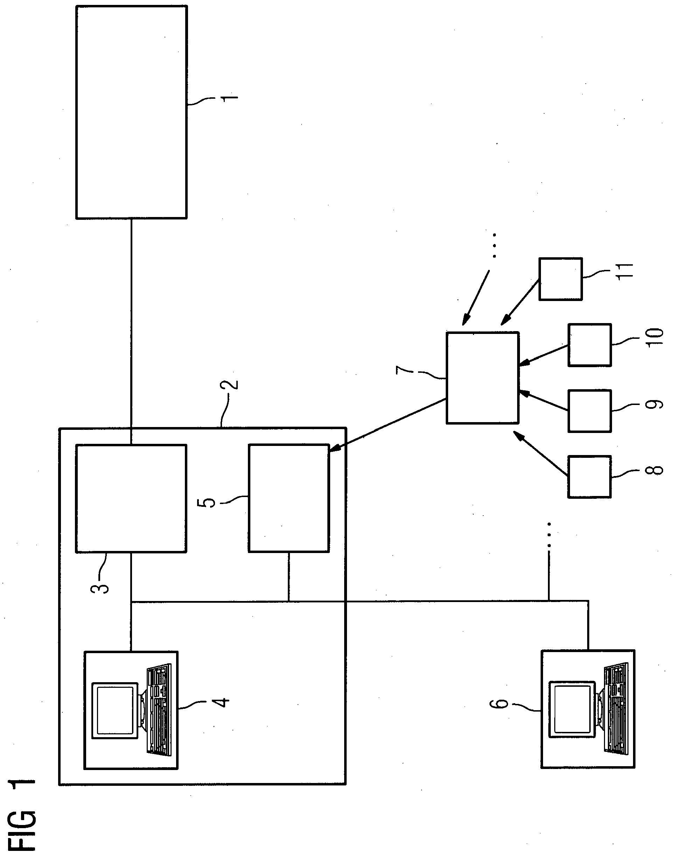

Figur 1 zeigt eine industrielle Anlage 1 mit einem Automatisierungssystem 2. Das Automatisierungssystem 2 weist ein oder mehrere Automatisierungsvorrichtungen 3 auf. Die Automatisierungsvorrichtung 3 dient zum Regeln und/oder Steuern der industriellen Anlage 1. Die industrielle Anlage 1 ist dementsprechend mit dem Automatisierungssystem 2 gekoppelt. Das Automatisierungssystem 2 weist mindestens eine Ein- und Ausgabevorrichtung 4 auf. Die Ein- und Ausgabevorrichtung 4 wird vorzugsweise zum Bedienen und Beobachten der industriellen Anlage 1 bzw. des Automatisierungssystems 2 genutzt.

Engineering-Ergebnisse sind zunächst in der Regel auf unterschiedlichen Datenträgern 8 bis 11 hinterlegt, wobei mehrere unterschiedliche Datenformate für verschiedene Engineering-Ergebnisse verwendet werden. Die Datenträger 8 bis 11 sind vorzugsweise elektronische Datenträger, wie beispielsweise CD-Roms. Ein Datenträger 8 bis 11 kann jedoch auch ein Baustein, z.B. einer Automatisierungsvorrichtung 3 sein. Auf den Datenträgern 8 bis 11 sind Engineering-Ergebnisse als Original-Daten, z.B. als Datei im pdf-Format, als AutoCAD-Zeichnung, oder beispielsweise auch als Standarddatei eines Anwendungsprogramms eines Personal Computers, z.B. im Microsoft-Office-Format, abgelegt. Auf einem Datenträger 8 bis 11 können auch Daten in verschiedenen proprietären Formaten von Engineering-Werkzeugen, z.B. Sigraph bzw. SIMATIC PCS 7, abgelegt sein. Auf einem oder mehreren Datenträgern 8 bis 11 abgelegte Engineering-Ergebnisse sind beispielsweise auch Stromlaufpläne, CAD-Unterlagen, Anlagen-Layouts und Software-Pläne.

Erfindungsgemäß werden die Datenträger 8 bis 11 mit den Originaldaten, d.h. den Engineering-Ergebnissen und/oder Daten zur Anlagendokumentation in den unterschiedlichen Datenformaten, einem Dokumentationsgenerator 7 zugeführt. Der Dokumentationsgenerator 7 weist entsprechende Schnittstellen auf, um die auf den Datenträgern 8 bis 11 in den unterschiedlichen Datenformaten hinterlegten Daten aus Dokumentations- und Engineering-Werkzeugen automatisch zu extrahieren und in ein standardisiertes Format zu überführen. Derart wird u.a. auch eine Unabhängigkeit von den ursprünglich verwendeten Engineering-Werkzeugen und deren Verfügbarkeit erreicht, wenn es um den Zugriff auf anlagenspezifische Daten zum Betrieb, zur Wartung und/oder zur Erweiterung der Anlage geht. Als standardisiertes Format werden eines oder mehrere der folgenden Formate verwendet: XML bzw. HTML, SVG (scaleable vectorgraphics, d.h. skalierbare Vektorgraphiken), CGM (Computer graphics metafile). Original-Daten im beispielsweise Microsoft-Office Format oder im pdf-Format werden mittels des Dokumentationsgenerators 7 vorzugsweise in ein XML- bzw. HTML-Format überführt, Daten wie Stromlaufpläne, CAD-Unterlagen, Software-Pläne und Anlagen-Layouts werden vorzugsweise in SVG bzw. CGM überführt.

Im Dokumentationsgenerator 7 werden die in ein standardisiertes Format, also ein Standardformat für die generierten Daten, überführten Daten nach semantischen Gesichtspunkten miteinander verknüpft. Zur Verknüpfung werden vorzugsweise intelligente Algorithmen verwendet. Die Verknüpfungen werden durch Navigationspfade zwischen den Daten im Standardformat nachgebildet.

Die mittels des Dokumentationsgenerators 7 in das Standardformat überführten und verknüpften Daten werden als so genannte generierte Anlagen-Dokumentation hinterlegt. Die generierte Anlagen-Dokumentation wird vorzugsweise auf einem Dokumentationsserver 5 hinterlegt. Wie in Figur 1 gezeigt, kann der Dokumentationsserver 5 vorzugsweise in das Automatisierungssystem 2 eingebunden sein. Auf die generierte Anlagen-Dokumentation kann über die mindestens eine Ein- und Ausgabevorrichtung 4 des Automatisierungssystems 2 zugegriffen werden. Es können weitere Endgeräte 6 vorgesehen sein, mit Hilfe derer auf die auf dem Dokumentationsserver 5 abgelegte generierte Anlagen-Dokumentation zugegriffen werden kann. Endgeräte 6 können z.B. sein: Recheneinrichtungen mit Anzeige- und Eingabe-Vorrichtung, wie z.B. Personal Computer, die innerhalb der industriellen Anlage 1 oder in der Umgebung der industriellen Anlage 1 aufgestellt sind.

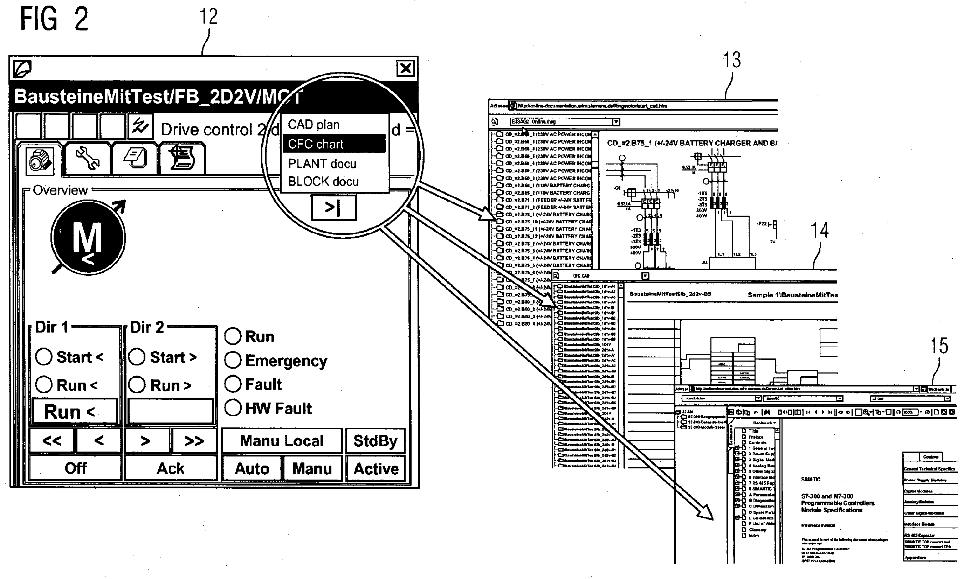

Figur 2 zeigt beispielhaft eine Benutzeroberfläche 12 einer Ein- und Ausgabevorrichtung 4. Die generierte Anlagen-Dokumentation wird auf dem Dokumentationsserver 5 (siehe Figur 1) derart bereitgestellt, dass von der Benutzeroberfläche 12 der Ein- und Ausgabevorrichtung 4 Kontext sensitiv auf die generierte Anlagen-Dokumentation zugegriffen werden kann. Die Ein- und Ausgabevorrichtung 4 (siehe Figur 1) weist vorzugsweise ein Visualisierungs-System, z.B. WinCC, auf, und ist mit einer oder mehreren Automatisierungsvorrichtungen 3 gekoppelt. Die Benutzeroberfläche 12 weist Kontext sensitive Bedienelemente, vorzugsweise für die industrielle Anlage 1, auf. Mit Hilfe so genannter aktiver Kontrolltechnologie (OCX-Technik bzw. so genannter "Active X Controls") wird einem oder mehreren Bedienelementen der Benutzeroberfläche 12 je eine Verknüpfung zur generierten Anlagen-Dokumentation zugeordnet. Je nach Bedeutung des Bedienelements der Benutzeroberfläche 12 kann beispielsweise ein Menü erzeugt werden, welches eine Verbindung zu einem oder mehreren relevanten Teilen der genierten Anlagen-Dokumentation herstellt. So kann beispielsweise zu einem auf der Benutzeroberfläche 12 implementierten Bedienelement, beispielsweise zu einem Ventil der industriellen Anlage 1, unmittelbar eine Verbindung zu beispielsweise einem Softwareplan mit Implementierungsinhalten zur Ansteuerung des Ventils, einem Stromlaufplan mit dem Einbauort des Ventils, einem OEM-Handbuch zu diesem Ventil, Einstellvorschriften zu diesem Ventil und/oder anderen Teilen 13 bis 15 der generierten Anlagen-Dokumentation hergestellt werden.

In Figur 2 ist die Verknüpfung zu unterschiedlichen Teilen 13 bis 15 der generierten Anlagen-Dokumentation beispielhaft dargestellt. Die Teile 13 bis 15 der generierten Anlagen-Dokumentation sind z.B. ein Hardware-Engineering bzw. CAD-Plan (Teil 13), ein Software-Engineering bzw. CFC-Plan (Teil 14), eine Geräte-Dokumentation (Teil 15). Erfindungsgemäß wird durch die mittels des Dokumentationsgenerators 7 generierte Anlagen-Dokumentation die Kontext sensitive Navigation zu bedien-relevanten Detail-Informationen ermöglicht. Vorzugsweise wird auch die Navigation zwischen den unterschiedlichen Teilen 13 bis 15 der generierten Anlagen-Dokumentation ermöglicht. Erfindungsgemäß wird auch ein leichtes Navigieren zwischen Software-Realisierung einerseits und korrespondierendem Hardware-Engineering andererseits von Bestandteilen einer industriellen Anlage 1 und/oder ihres Automatisierungssystems 2 ermöglicht.

Erfindungsgemäß können außerdem in Teile 13 bis 15 der mittels des Dokumentationsgenerators 7 generierten Anlagen-Dokumentation aktuelle Prozessdaten der industriellen Anlage 1 eingeblendet werden, so z.B. Eingangsdaten von Baustein-Konnektoren in den entsprechenden Teil 14 der generierten Anlagen-Dokumentation. Die generierte Anlagen-Dokumentation wird so dynamisiert und mit der vorzugsweise im Betrieb befindlichen industriellen Anlage 1 vorzugsweise aktiv gekoppelt. Es erfolgt auch ein Einblenden von aktuellen Prozessdaten in beispielsweise Software-Pläne zur besseren Übersicht eines Service- oder Entwicklungsingenieurs während der Betriebsphase einer industriellen Anlage 1.

Es ist auch möglich, von unterschiedlichen Endgeräten 6 auf die generierte Anlagen-Dokumentation, vorzugsweise auch auf die dynamisierte Anlagen-Dokumentation, zuzugreifen. Endgeräte 6 können auch mobile Endgeräte wie beispielsweise PDAs (Personal Digital Assistants), Mobiltelefone oder tragbare Recheneinrichtungen wie Notebooks bzw. Tablet-PCs sein. Derartige mobile Endgeräte können somit zumindest in begrenztem Umfang zur Steuerung der industriellen Anlage 1 eingesetzt werden.

Ein für die Erfindung wesentlicher Gedanke lässt sich wie folgt zusammenfassen:
Die Erfindung betrifft ein Verfahren zur Verknüpfung von technischen Daten, insbesondere zur Verknüpfung von Hardware- und Software-Engineering-Daten sowie von Zusatzdokumenten für eine webbasierte Visualisierung einer industriellen Anlagendokumentation mit Hilfe eines Dokumentationsgenerators 7. Die Erfindung betrifft auch ein System zum Bedienen und Beobachten einer industriellen Anlage 1 mit mindestens einer Ein- und Ausgabevorrichtung 4, 6, mit mindestens einer Automatisierungsvorrichtung 3 und mit einem Dokumentationsserver 5, auf dem die mit Hilfe des Dokumentationsgenerators 7 generierte Anlagen-Dokumentation abgelegt ist.

## Patentansprüche

1. Verfahren zur Verarbeitung von Prozessdaten einer industriellen Anlage, wobei:
- in unterschiedlichen Datenformaten gespeicherte Dokumentationsdaten der Prozessdaten einem Dokumentationsgenerator (7) zugeführt werden,
- diese Dokumentationsdaten mittels des Dokumentationsgenerators (7) aus zugehörigen Dateien und/oder Werkzeugen extrahiert und in mindestens ein standardisiertes Format umgewandelt und gespeichert werden,
- diese in mindestens einem standardisierten Format gespeicherten Dokumentationsdaten nach semantischen Gesichtspunkten miteinander verknüpft werden und deren Verknüpfung gespeichert und/oder ausgegeben wird,
- die Dokumentationsdaten als eine generierte Anlagen-Dokumentation auf einem Dokumentationsserver (5) abgelegt werden,
- aktuelle Prozessdaten in Teile (13 bis 15) der generierten Anlagen-Dokumentation eingeblendet werden.

2. Verfahren nach Anspruch 1, wobei die Verknüpfung der in mindestens einem standardisierten Format vorliegenden Dokumentationsdaten in Form von Navigationspfaden nachgebildet wird.

3. System zum Bedienen und Beobachten einer industriellen Anlage, umfassend:
- mindestens eine Ein- und Ausgabevorrichtung (4, 6) zur Ausgabe der Anlagen-Dokumentation und mindestens eine Automatisierungsvorrichtung (3), die miteinander gekoppelt sind,
- einen Dokumentationsgenerator (7), dem in unterschiedlichen Datenformaten gespeicherte Dokumentationsdaten der Prozessdaten zuführbar sind und der diese Dokumentationsdaten aus den zugehörigen Dateien und/oder Werkzeugen extrahiert und in mindestens ein standardisiertes Format umwandelt und die in dem standardisierten Format umgewandelten Dokumentationsdaten nach semantischen Gesichtspunkten miteinander verknüpft und deren Verknüpfung speichert und ausgibt und eine Anlagen-Dokumentation generiert, und
- einen Dokumentationsserver (5) zur Hinterlegung einer aus den Dokumentationsdaten generierten Anlagen-Dokumentation, wobei der Dokumentationsserver (5) mit mindestens einer der Ein- und Ausgabevorrichtungen (4, 6) derart koppelbar ist, dass in Teilen (13 bis 15) der Anlagen-Dokumentation aktuelle Prozessdaten einblendbar sind.

4. System nach Anspruch 3, wobei die Ein- und Ausgabevorrichtung (4, 6) Mittel zur Ansteuerung der Automatisierungsvorrichtung (3) aufweist, die Kontext sensitiv mit den entsprechenden Teilen der auf dem Dokumentationsserver (5) abgelegten generierten Anlagen-Dokumentation verknüpfbar sind.

## Claims

1. Method for processing process data of an industrial plant, wherein:
- documentation data of the process data stored in different data formats are fed to a documentation generator (7),
- these documentation data are extracted by means of the documentation generator (7) from associated files and/or tools and converted into at least one standardized format and stored,
- these documentation data, stored in at least one standardized format, are interlinked with one another on the basis of semantic aspects and their interlinkage is stored and/or output,
- the documentation data are stored as a generated plant documentation on a documentation server (5),
- current process data are superposed on parts (13 to 15) of the generated plant documentation.

2. Method according to Claim 1, wherein the interlinkage of the data in at least one standardized format is replicated in the form of navigation paths.

3. System for operating and observing an industrial plant, comprising:
- at least one input and output device (4, 6) for outputting the plant documentation and at least one automation device (3), which are coupled with one another,
- a documentation generator (7), to which documentation data of the process data stored in different data formats can be fed and which extracts these documentation data from the associated files and/or tools and converts them into at least one standardized format and, on the basis of semantic aspects, interlinks the documentation data converted into the standardized format with one another and stores and outputs their interlinkages, and generates a plant documentation, and
- a documentation server (5) for storing a plant documentation generated from the documentation data, wherein the documentation server (5) can be coupled with at least one of the input and output devices (4, 6) in such a way that current process data can be superposed on parts (13 to 15) of the plant documentation.

4. System according to Claim 3, wherein the input and output device (4, 6) has means for activating the automation device (3), which means can be linked context-sensitively with the corresponding parts of the generated plant documentation stored on the documentation server (5).

## Revendications

1. Procédé de traitement de données de process d'une installation industrielle, dans lequel :
- des données de documentation, mémorisées sous des formats de données différents, desdites données de process sont acheminées à un générateur de documentation (7),
- lesdites données de documentation sont extraites à partir de données et/ou d'outils associé(e)s au moyen du générateur de documentation et sont converties et mémorisées sous au moins un format normalisé,
- lesdites données de documentation mémorisées sous au moins un format normalisé sont reliées les unes aux autres en fonction d'aspects sémantiques et leur relation est mémorisée et/ou éditée,
- les données de documentation sont déposées sur un serveur de documentation (5) en tant que documentation d'installation générée,
- des données effectives de process sont enchainées dans des parties (13 à 15) de la documentation d'installation générée.

2. Procédé selon la revendication 1, dans lequel la relation des données de documentation présentes sous au moins un format normalisé est reproduite sous la forme de chemins d'accès de navigation.

3. Système destiné à commander et observer une installation industrielle, comprenant :
- au moins un dispositif d'entrée et d'édition (4, 6) destiné à éditer la documentation d'installation et au moins un dispositif d'automatisation (3), qui sont couplés l'un avec l'autre,
- un générateur de documentation (7), vers lequel peuvent être acheminées des données de documentation, mémorisées sous différents formats de données, desdites données de process et qui extrait lesdites données de documentation à partir de données et/ou outils associé(e)s et les convertit sous au moins un format normalisé et relie les unes aux autres en fonction d'aspects sémantiques les données de documentation converties sous le format normalisé et mémorise et édite ladite relation et génère une documentation d'installation, et
- un serveur de documentation (5) destiné à une mise en dépôt d'une documentation d'installation générée à partir des données de documentation, dans lequel le serveur de documentation (5) peut être couplé avec au moins un des dispositifs d'entrée et d'édition (4, 6) de telle manière que des données de process effectives peuvent être enchainées dans des parties (13 à 15) de la documentation d'installation.

4. Système selon la revendication 3, dans lequel le dispositif d'entrée et d'édition (4, 6) présente un moyen destiné à activer le dispositif d'automatisation (3), lequel moyen peut être relié aux parties correspondantes de la documentation d'installation générée déposée sur le serveur de documentation (5) de manière sensible au contexte.
